# EUROPEAN PATENT APPLICATION

(11) **EP 4 844 905 A1**
(43) Date of publication of application: **25.11.2026**
(21) Application number: 24919693.2
(22) Date of filing: 16.08.2024
(51) Int. Cl.: H01M 50/15, H01M 50/533, H01M 50/586

(54) **BATTERY CELL, BATTERY AND ELECTRICAL APPARATUS**

(30) Priority: 23.01.2024 CN 202420166067 U
(71) Applicant: Contemporary Amperex Technology Co., Limited, Ningde, Fujian 352100 (CN)
(72) Inventor: CHEN, Wenwei, Ningde, Fujian 352100 (CN); LIN, Denghua, Ningde, Fujian 352100 (CN); LI, Quankun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2024/112794
(87) International publication number: WO 2025/156611

(57) **Abstract**

A battery cell, a battery and a power consuming apparatus are provided, which belong to the technical field of batteries. The battery cell includes a first housing wall, a terminal, and a first insulating member. The terminal passes through the first housing wall and includes a first fixing portion and a second fixing portion disposed on two sides of the first housing wall. The first fixing portion includes a first surface facing away from the first housing wall. The first insulating member is disposed on a side of the first housing wall facing toward the first fixing portion, and includes a first part located between the first fixing portion and the first housing wall, and a second part located in an outer peripheral region of the first fixing portion. The second part includes a relief surface disposed around the first fixing portion, and the relief surface is disposed closer to the first housing wall relative to the first surface.

## Description

### CROSS-REFERENCE TO RELATED APPLICATIONS

The present application claims priority to Chinese Patent Application No. 202420166067.1, filed on January 23, 2024. The entire content of the foregoing application is incorporated herein by reference.

### TECHNICAL FIELD

The present application relates to the technical field of batteries, and in particular, to a battery cell, a battery, and a power consuming apparatus.

### BACKGROUND

In recent years, new energy vehicles have achieved leapfrog development. In the field of electric vehicles, power batteries, as power sources of the electric vehicles, play an irreplaceable important role. The power batteries include a plurality of battery cells. However, reliability of the battery cells is to be improved.

### SUMMARY

Embodiments of the present application provide a battery cell, a battery, and a power consuming apparatus, to improve reliability of the battery cell.

According to a first aspect, an embodiment of the present application provides a battery cell, including a housing, a terminal, and a first insulating member. The housing includes a first housing wall. The terminal includes a pass-through portion that passes through the first housing wall, and a first fixing portion and a second fixing portion that are connected to the pass-through portion and that are respectively disposed on two sides of the first housing wall in a wall thickness direction. The first fixing portion includes a first surface facing away from the first housing wall. The first insulating member is disposed on a side of the first housing wall facing toward the first fixing portion, and includes a first part located between the first fixing portion and the first housing wall, and a second part located in an outer peripheral region of the first fixing portion. The second part includes a relief surface disposed around the first fixing portion, and the relief surface is disposed closer to the first housing wall relative to the first surface.

In the foregoing technical solution, a side surface away from the first housing wall that is of a part of the first insulating member surrounding the first fixing portion is designed to be the relief surface, to form a first relief space on a side of the relief surface away from the first housing wall. In this way, on the premise that the first fixing portion is completely covered by a riveting pin, the first relief space is used to avoid a part of the riveting pin that is beyond the first fixing portion, to improve a problem of fracturing or imprinting caused by the riveting pin to the first insulating member, so as to protect the first insulating member, so that insulating and sealing reliability between the housing and the terminal is improved, and reliability of the battery cell is improved. In addition, because the first fixing portion can be completely covered by the riveting pin, a problem of imprinting formed by the first fixing portion and unqualified flatness that are caused because the first fixing portion cannot be completely pressed by the riveting pin can be resolved.

In some embodiments, the second part includes a protruding portion that protrudes toward a direction away from the first housing wall relative to the relief surface, and the relief surface is disposed between the protruding portion and the first fixing portion.

In the foregoing technical solution, the relief surface is disposed on a side of the protruding portion close to the first fixing portion, so that the first fixing portion can be spaced apart from the protruding portion through the first relief space formed on the relief surface. In this way, on the premise that a protruding requirement of the protruding portion is satisfied, a problem that the protruding portion is extruded by the riveting pin can be improved.

In some embodiments, the battery cell includes an active material coating portion located on an inner side of the first housing wall. The first insulating member is disposed on the inner side of the first housing wall. The protruding portion includes a first protrusion. The first protrusion includes a second surface disposed away from the first housing wall. The second surface is farther away from the first housing wall relative to the first surface, to abut against the active material coating portion.

In the foregoing technical solution, the first insulating member is provided with the first protrusion to abut against the active material coating portion, so that mounting stability of the active material coating portion in the housing can be improved, a risk of a short circuit between the active material coating portion and the terminal is reduced, and the reliability of the battery cell is further improved.

In some embodiments, a quantity of first protrusions is more than one and the plurality of first protrusions are spaced apart.

In the foregoing technical solution, the first insulating member is provided with the plurality of first protrusion to abut against the active material coating portion, so that abutment of the active material coating portion at a plurality of positions can be implemented. In this way, the mounting stability of the active material coating portion in the housing can be further improved, the risk of the short circuit between the active material coating portion and the terminal is further reduced, and the reliability of the battery cell is improved.

In some embodiments, a pressure relief structure is disposed on the first housing wall, the protruding portion includes a second protrusion, and the second protrusion forms, at a position corresponding to the pressure relief structure, a cavity that is open toward a direction of the pressure relief structure.

In the foregoing technical solution, the first insulating member is provided with the second protrusion to define the cavity, so that there may be a specific space between the first insulating member and the pressure relief structure, to improve a case in which the first insulating member is tightly attached to the pressure relief structure. In this way, reliability of opening a valve of the pressure relief structure for pressure relief can be improved, and operating reliability of the battery cell can be improved.

In some embodiments, the second protrusion includes a third surface disposed away from the first housing wall, and the third surface is disposed farther away from the first housing wall relative to the first surface, or is flush with the first surface.

In the foregoing technical solution, a side surface of the second protrusion away from the first housing wall is disposed farther away from the first housing wall relative to the first surface or is flush with the first surface, so that the second protrusion can protrude toward a direction away from the first housing wall by a larger distance. In this way, when it is ensured that a wall thickness of the second protrusion is not excessively thin, a relatively deep cavity can be formed, to balance structural reliability of the first insulating member and the reliability of valve opening of the pressure relief structure for pressure relief.

In some embodiments, the relief surface enables a spacing distance between the first fixing portion and the protruding portion to be greater than or equal to 1 mm.

In the foregoing technical solution, the relief surface is disposed to enable the spacing distance between the first fixing portion and the protruding portion to be greater than or equal to 1 mm, so that a larger space can be reserved to enable a coverage range of the riveting pin to be sufficiently greater than a range of the first fixing portion. In this way, when a requirement of a fixture positioning tolerance is satisfied, a requirement for completely covering the first fixing portion by the riveting pin is satisfied, and the spacing distance between the first fixing portion and the protruding portion is sufficient for relief, to improve a case in which the riveting pin extrudes the protruding portion during riveting, so that a problem of fracturing or imprinting on the first insulating member is improved.

In some embodiments, a height difference between the relief surface and the first surface is greater than or equal to 0.5 mm.

In the foregoing technical solution, in a process of riveting, the riveting pin needs to move toward a direction of the relief surface by a specific distance. The height difference between the relief surface and the first surface is set to be greater than or equal to 0.5 mm, so that there is a sufficient height space to avoid the riveting pin, and relief of the riveting pin is implemented when a riveting requirement of the terminal is satisfied. In this way, the first insulating member is protected.

In some embodiments, the height difference between the relief surface and the first surface is also less than or equal to 1 mm.

In the foregoing technical solution, the height difference between the relief surface and the first surface is limited to range from 0.5 mm to 1 mm, so that an excessively thin wall thickness of the first insulating member at a step surface can be effectively improved when the riveting requirement of the terminal is satisfied, which is conducive to improving the structural reliability of the first insulating member.

In some embodiments, the battery cell further includes a second insulating member and an insulating and sealing member. The second insulating member is disposed on a side of the first housing wall facing toward the second fixing portion, and at least a part of the second insulating member is clamped between the second fixing portion and the first housing wall. The insulating and sealing member is disposed between the first housing wall and the terminal, and is located on a side of the second insulating member close to the first fixing portion, and a side of the first insulating member close to the pass-through portion. The insulating and sealing member is an elastic member and is elastically compressed to be sealed between the first fixing portion and the first housing wall.

In the foregoing technical solution, after the terminal and the first housing wall are assembled in place, the insulating and sealing member is extruded by the first fixing portion and the first housing wall and presents a compressed state, so that a sealing portion can be tightly attached to the first fixing portion and the first housing wall under the action of an elastic force of the sealing portion, to implement sealing between the housing and the terminal. In this way, insulating and sealing between the first housing wall and the terminal are implemented.

In some embodiments, the first insulating member is located on the inner side of the first housing wall. The first relief space is formed on a side of the relief surface away from the first housing wall. A first channel that is in communication with the relief space is formed between the first insulating member and the first fixing portion. A second channel that is in communication with the outside of the housing is formed between the second insulating member and the second fixing portion or the first housing wall. A communication position between the second channel and the first channel is blocked by the insulating and sealing member.

In the foregoing technical solution, the first channel and the second channel are provided, to find whether an insulating and sealing member that is at a relatively concealed position is omitted for mounting, so that the terminal and the first housing wall can be sealed in a reliable manner.

In some embodiments, the first insulating member has a first groove that is open toward the first fixing portion, and the first groove defines at least a part of the first channel. The second insulating member includes a second groove that is open toward the first housing wall, and the second groove defines at least a part of the second channel.

In the foregoing technical solution, the first groove is processed on the first insulating member and the second groove is processed on the second insulating member, so that the first channel and the second channel can be simply and conveniently constructed, to reduce processing and assembly difficulty, and improve production efficiency.

In some embodiments, both a groove depth of the first groove and a groove depth of the second groove range from 0.2 mm to 0. 35 mm, and both a groove width of the first groove and a groove width of the second groove range from 0.2 mm to 0. 5 mm.

In the foregoing technical solution, the groove depths and the groove widths of the first groove and the second groove are defined as above, so that both a processing requirement and a detection requirement can be satisfied.

In some embodiments, the terminal is surrounded by a plurality of first channels that are spaced apart and a plurality of second channels that are spaced apart, and positions of the plurality of first channels and positions of the plurality of second channels are in one-to-one correspondence.

In the foregoing technical solution, the plurality of first channels and the plurality of second channels that are in one-to-one correspondence are provided, so that a risk that a single channel is blocked by a foreign object and cannot be normally detected can be reduced, and mounting omission detection of the insulating and sealing member can be successfully and reliably performed.

In some embodiments, first channels are respectively provided on two opposite sides of the terminal. A quantity of second channels is the same as a quantity of first channels, and the positions of the second channels correspond to the positions of the first channels.

In the foregoing technical solution, it is conducive to implementing non-directional mounting of the first insulating member and the first insulating member, and foolproof operation can be implemented, to reduce assembly difficulty and improve assembly efficiency.

In some embodiments, the insulating and sealing member includes the sealing portion disposed between the first fixing portion and the first housing wall, and an insulating portion disposed between the pass-through portion and the first housing wall. The sealing portion is disposed close to the pass-through portion relative to the first part, and is elastically compressed to be in sealing fit between the first fixing portion and the first housing wall. One end of the insulating portion away from the first fixing portion abuts against the second insulating member.

In the foregoing technical solution, a structure of the insulating and sealing member is disposed as above, so that insulating performance between the first housing wall and the terminal can be improved, and the problem of the short circuit is improved.

In some embodiments, the first part includes a first section portion and a second section portion. The first section portion is clamped between the first fixing portion and the first housing wall. The second section portion is connected to a side of the first section portion close to the pass-through portion, and the second section portion and the first fixing portion are spaced apart, to form a second relief space between the second section portion and the first fixing portion. A part of the insulating and sealing member extends into the second relief space.

In the foregoing technical solution, the second relief space is disposed, so that the insulating and sealing member can be fully compressed, to seal a gap between the first fixing portion and the first housing wall in a reliable manner, so as to improve sealing fit performance between the housing and the terminal.

In some embodiments, an accommodating cavity is formed in the housing. An accommodating groove that is open toward a direction away from the accommodating cavity is formed on the terminal. The terminal has a communication hole. The communication hole runs through a side groove wall that is of the accommodating groove and that is close to the accommodating cavity, and is in communication with the accommodating cavity and the accommodating groove.

In the foregoing technical solution, when an electrolyte solution is injected into the battery cell, the electrolyte solution can be injected into the accommodating groove, and then flows toward the accommodating cavity through the communication hole. The accommodating groove can temporarily store the electrolyte solution, to improve problems such as splashing and overflowing of the electrolyte solution. In addition, to some extent, a side wall of the accommodating groove can prevent the electrolyte solution from splashing out, reduce pollution caused by the electrolyte solution to the outside, and facilitate quick liquid injection. In addition, because a liquid injection channel does not need to be separately provided on the housing, special processing does not need to be performed on the housing, which is conducive to reducing structural complexity and processing difficulty of the housing.

In some embodiments, the battery cell includes a battery core assembly. The battery core assembly includes an active material coating portion received in the accommodating cavity, and a conductive portion connected to the active material coating portion. The conductive portion passes through the communication hole to be at least partially received in the accommodating groove.

In the foregoing technical solution, the conductive portion is at least partially received in the accommodating groove, and as a result, at least a part of the conductive portion occupies a space in the accommodating groove, so that a space occupied by the conductive portion in the accommodating cavity can be reduced, and a space in the accommodating cavity can be saved to receive the active material coating portion of a larger volume, which is conducive to improving an energy density of the battery cell, or is conducive to reducing a size of the battery cell when the energy density of the battery cell is not changed.

In some embodiments, the battery cell includes a terminal cover plate that covers the accommodating groove. A liquid injection hole that is in communication with the accommodating groove is formed on the terminal cover plate. The battery cell further includes a sealing structure that is configured to seal the liquid injection hole.

In the foregoing technical solution, the liquid injection hole is provided on the terminal cover plate, and an opening is relatively small and is provided at an outer position, so that a liquid injection inlet can be sealed relatively easily through the sealing structure in a reliable manner, the operating reliability of the battery cell can be improved, and flexible and diversified design of the sealing structure can be implemented.

In some embodiments, a plurality of terminals are disposed on the first housing wall, and the second part includes the relief surface that is separately disposed around each first fixing portion
In the foregoing technical solution, when the plurality of terminals are mounted on the first housing wall in a riveting manner, a problem of fracturing or imprinting on the first insulating member is not easily caused, so that the reliability of the first insulating member is further improved.

In some embodiments, a quantity of terminals on the first housing wall is two, and polarities of the two terminals are opposite.

In the foregoing technical solution, both a positive electrode terminal and a negative electrode terminal are mounted on the first housing wall, which is conducive to improving the production efficiency of the battery cell.

In some embodiments, the housing includes a housing body and an end cover. The housing body defines the accommodating cavity that is open toward a direction of the end cover. The end cover covers an opening of the accommodating cavity. The first housing wall is a wall portion that is of the housing body and that is disposed opposite to the end cover.

In the foregoing technical solution, the terminal is disposed on a side of the housing body that is opposite to the end cover, so that a connection position between the housing body and the end cover can be away from the terminal.

In some embodiments, the first fixing portion is located on a side of the first housing wall facing toward the accommodating cavity, and the second fixing portion is fixed on the first housing wall in a riveting manner.

In the foregoing technical solution, riveting can be performed from an outer side of the housing body, which facilitates riveting operation.

According to a second aspect, an embodiment of the present application further provides a battery, including the battery cell according to any one of the foregoing solutions.

In the foregoing technical solution, reliability of the battery cell according to this embodiment of the present application is improved, which is conducive to improving performance of the battery.

According to a third aspect, an embodiment of the present application further provides a power consuming apparatus, including the battery according to any one of the foregoing solutions.

In the foregoing technical solution, performance of the battery is improved, which is conducive to improving operating electricity performance of the power consuming apparatus.

### BRIEF DESCRIPTION OF DRAWINGS

To describe technical solutions of embodiments of the present application more clearly, accompanying drawings required in the embodiments of the present application are briefly described below. It should be understood that, the following accompanying drawings show only some embodiments of the present application, which cannot be considered as limitation on the scope. A person of ordinary skill in the art may still derive other accompanying drawings from these accompanying drawings without creative efforts.
FIG. 1 is a schematic diagram of a structure of a vehicle according to some embodiments of the present application;
FIG. 2 is an exploded view of a structure of a battery according to some embodiments of the present application;
FIG. 3 is a schematic diagram of a structure of a battery cell according to some embodiments of the present application;
FIG. 4 is an exploded view of a structure of a battery cell shown in FIG. 3;
FIG. 5 is a schematic diagram of an orthographic projection of a battery cell according to some embodiments of the present application;
FIG. 6 is a cross-sectional view along a line A-A in FIG. 5;
FIG. 7 is a partially enlarged view of a part B circled in FIG. 6;
FIG. 8 is a partially enlarged view of a part C circled in FIG. 7;
FIG. 9 is a schematic diagram of riveting of a terminal according to some embodiments of the present application;
FIG. 10 is a cross-sectional view along a line E-E in FIG. 5; and
FIG. 11 is a partially enlarged view of a part D circled in FIG. 6.

Reference numerals: a vehicle 1000; a first direction X; a second direction Y; a third direction Z; a battery 100; a controller 200; a motor 300; a box 101; a first box body 1011; a second box body 1012; a battery cell 102; a housing 1; a housing body 1a; an end cover 1b; an accommodating cavity 10; a first housing wall 11; a mounting hole 12; a central axis L; a second housing wall 13; a terminal 2; a pass-through portion 21; a first fixing portion 22; a first surface 221; a second fixing portion 23; an accommodating groove 25; a communication hole 26; a support portion 27; a sealing and insulating assembly 3; a first relief space 30; a first insulating member 31; a first part 311; a first section portion 3111; a second section portion 3112; a second part 312; a relief surface 3121; a protruding portion 3122; a first protrusion 3123; a second surface 31231; a second protrusion 3124; a cavity 31241; a third surface 31242; a first groove 315; a second relief space 316; a second insulating member 32; a first part 321; a second groove 325; an insulating and sealing member 33; a sealing portion 331; a local part 3311; an insulating portion 332; a first channel S1; a second channel S2; a battery core assembly 4; an active material coating portion 41; a conductive portion 42; a terminal cover plate 5; a liquid injection hole 51; a sealing structure 6; a first sealing member 61; a second sealing member 62; a pressure relief structure 7; and a riveting pin 2000.

### DETAILED DESCRIPTION

In order to make objectives, technical solutions, and advantages of embodiments of the present application clearer, the technical solutions in the embodiments of the present application will be clearly described below with reference to accompanying drawings in the embodiments of the present application. Apparently, the embodiments to be described are only a part rather than all of the embodiments of the present application. Based on the embodiments of the present application, all other embodiments obtained by a person of ordinary skill in the art without creative efforts shall fall within a protection scope of the present application.

Unless otherwise defined, all technical and scientific terms used in the present application have same meanings as commonly understood by a person skilled in the technical field of the present application. The terms used in applied specification of the present application are merely for an objective of describing specific embodiments, and are not intended to limit the present application. The terms "comprise", "include" and any variations thereof in the specification and claims of the present application and in the foregoing descriptions of the accompanying drawings are intended to cover a non-exclusive inclusion. The terms "first", "second" and the like in the specification and claims of the present application, or in the foregoing accompanying drawings are used to distinguish different objects, rather than to describe a specific sequence or primary-secondary relationship.

Reference to "an embodiment" in the present application means that a particular feature, structure or characteristic described in combination with the embodiment may be included in at least one embodiment of the present application. The phrase shown in various positions in the specification may not necessarily refer to a same embodiment, and is not an independent or optional embodiment exclusive from another embodiment.

In the descriptions of the present application, it should be noted that, unless otherwise expressly specified and defined, the terms such as "mounting", "interconnection", "connection", and "attachment" shall be understood in a broad sense. For example, a connection may refer to a fixed connection, a detachable connection, or an integral connection; or may refer to a direct connection or an indirect connection through an intermediate medium, or may refer to an internal communication between the two elements. A person of ordinary skill in the art may understand specific meanings of the terms in the present application according to specific situations.

The term "and/or" in the present application describes only an association relationship for describing associated objects and represents that three relationships may exist. For example, A and/or B may represent the following three cases: Only A exists, both A and B exist, and only B exists. In addition, a character "/" in the present application generally indicates an "or" relationship between associated objects.

In the embodiments of the present application, same components are indicated by same reference numerals, and for brevity, detailed descriptions of the same components are omitted in different embodiments. It should be understood that, sizes such as thicknesses, lengths, and widths of various components in the embodiments of the present application and sizes such as an overall thickness, a length and a width of an integrated apparatus shown in the accompanying drawings are merely exemplary descriptions, and should not constitute any limitation of the present application.

In the present application, "a plurality of" refers to two or more (including two).

In the present application, a battery cell may include a lithium-ion secondary battery, a lithium-ion primary battery, a lithium-sulfur battery, a sodium-ion and lithium-ion battery, a sodium-ion battery, or a magnesium-ion battery, and the like, which is not limited in the embodiments of the present application. The battery cell may be cylindrical, flat, cuboid, or in other shapes, which is not limited in the embodiments of the present application. Generally, the battery cell is divided into three types in encapsulating manners: a cylindrical battery cell, a square battery cell and a soft package battery cell, which is also not limited in the embodiments of the present application.

A battery mentioned in the embodiments of the present application refers to a single physical module including one or more battery cells to provide a higher voltage and a higher capacity. For example, the battery provided in the present application may include a battery module, a battery pack, or the like. The battery module generally includes a plurality of battery cells. The battery pack generally includes a box configured to encapsulate one or more battery cells, or one or more battery modules. The box can improve a case in which a liquid or another foreign object affects charging or discharging of the battery cell.

The battery cell includes a housing, a battery core assembly, and an electrolyte solution. The housing is configured to accommodate the battery core assembly and the electrolyte solution. The battery core assembly includes at least one electrode assembly. The electrode assembly includes a positive electrode plate, a negative electrode plate, and a separator. The electrode assembly may be in a winding structure, a stacked structure, or the like. Operating of the battery cell mainly relies on movement of metal ions between the positive electrode plate and the negative electrode plate.

Generally, the positive electrode plate may include a positive electrode current collector and a positive electrode active substance layer. The positive electrode active substance layer is directly or indirectly coated on the positive electrode current collector. The positive electrode current collector not coated with the positive electrode active substance layer protrudes out of the positive electrode current collector already coated with the positive electrode active substance layer, and the positive electrode current collector not coated with the positive electrode active substance layer is used as a positive electrode tab. Using the lithium-ion battery as an example, a material of the positive electrode current collector may be aluminum, and a material of the positive electrode active substance layer may be lithium cobalt oxide, lithium iron phosphate, ternary lithium, lithium manganese oxide, or the like.

Generally, the negative electrode plate may include a negative electrode current collector and a negative electrode active substance layer. The negative electrode active substance layer is directly or indirectly coated on the negative electrode current collector. The negative electrode current collector not coated with the negative electrode active substance layer protrudes out of the negative electrode current collector already coated with the negative electrode active substance layer, and the negative electrode current collector not coated with the negative electrode active substance layer is used as a negative electrode tab. A material of the negative electrode current collector may be copper, and a material of the negative electrode active substance layer may be carbon, silicon, or the like.

To ensure that fusing does not occur when a large current passes through, there are a plurality of positive electrode tabs and the positive electrode tabs are stacked together to form a tab portion of a positive electrode, and there are a plurality of negative electrode tabs and the negative electrode tabs are stacked together to a form a tab portion of a negative electrode. A terminal is disposed on the housing. The tab portion of the positive electrode is electrically connected to a terminal of the positive electrode, and the tab portion of the negative electrode is electrically connected to a terminal of the negative electrode. For example, the tab portion may be connected to the terminal, to form a direct electrical connection between the tab portion and the terminal. For another example, the battery core assembly may include an adapter sheet. The tab portion is connected to the adapter sheet, and the adapter sheet is connected to the terminal, to form an indirect electrical connection between the tab portion and the terminal.

A material of the separator is not limited, and may be, for example, polypropylene or polyethylene.

In a battery cell in the related art, to implement insulating and sealing performance between the housing and the terminal, an insulating and sealing assembly is usually disposed between the terminal and the housing. The terminal usually includes a pass-through portion that passes through the housing, and an inner fixing portion and an outer fixing portion that are latched and limited on both an inner side and an outer side of the housing. The insulating and sealing assembly includes an inner insulating member that is located on an inner side of the housing and that is clamped between the inner fixing portion and the housing, and an outer insulating member that is located on an outer side of the housing and that is clamped between the outer fixing portion and the housing. To facilitate mounting of the terminal, during assembly, the inner insulating member and the outer insulating member may be first mounted in place, and then the terminal passes through the housing. From the inner side of the housing, the inner fixing portion is supported by using the riveting pin, and from the outer side of the housing, the terminal is riveted by a riveting apparatus to form the outer fixing portion that is latched and limited on the outer side of the housing.

However, affected by factors such as an assembly tolerance and a processing tolerance, it is difficult for the riveting pin to exactly cover the inner fixing portion. If a coverage area of the riveting pin is less than an area of the inner fixing portion, an edge of the inner fixing portion cannot be completely pressed by the riveting pin, which will lead to an uneven inner fixing portion, and unqualified flatness of the terminal. However, if the coverage area of the riveting pin is equal to or slightly greater than the area of the inner fixing portion, although the edge of the inner fixing portion can be completely pressed by the riveting pin, due to the assembly tolerance, the inner insulating member (that is, a part of the inner insulating member located around the inner fixing portion) surrounding the inner fixing portion may be further pressed by the riveting pin. In this way, in a riveting process, the riveting pin can cause a problem of fracturing occurring on the inner insulating member or imprinting formed on the inner insulating member, which affect insulating and sealing reliability between the housing and the terminal, resulting in reduction of reliability of the battery cell.

Therefore, an embodiment of the present application provides the battery cell. A relief surface is designed on a part of the insulating member that surrounds the terminal and that is on a side of the terminal that needs to cooperate with the riveting pin to implement relief. In this way, on the premise that a non-riveting surface of the terminal is completely covered by the riveting pin, a first relief space on the relief surface is used to avoid the riveting pin, to improve a problem of fracturing or imprinting caused by the riveting pin to the insulating member on the side of the terminal, and to protect the insulating member on the side of the terminal, so that the insulating and sealing reliability between the housing and the terminal is improved, and the reliability of the battery cell is improved. In addition, because the non-riveting surface of the terminal can be completely covered by the riveting pin, problems of imprinting formed on the non-riveting surface of the terminal and unqualified flatness that are caused because the non-riveting surface of the terminal cannot be completely pressed by the riveting pin can be resolved.

An embodiment of the present application provides a power consuming apparatus that uses a battery as power supply. The power consuming apparatus may be, but is not limited to, a mobile phone, a tablet computer, a notebook computer, an electric toy, an electric tool, an electromobile, an electric vehicle, a ship, a spacecraft, and the like. The electric toy may include a fixed or a mobile electric toy, for example, a game console, an electric car toy, an electric ship toy, and an electric airplane toy; and the spacecraft may include an airplane, a rocket, a space shuttle, a spaceship and the like.

For ease of description, the following embodiments are described by using an example in which a power consuming apparatus in an embodiment of the present application is a vehicle 1000.

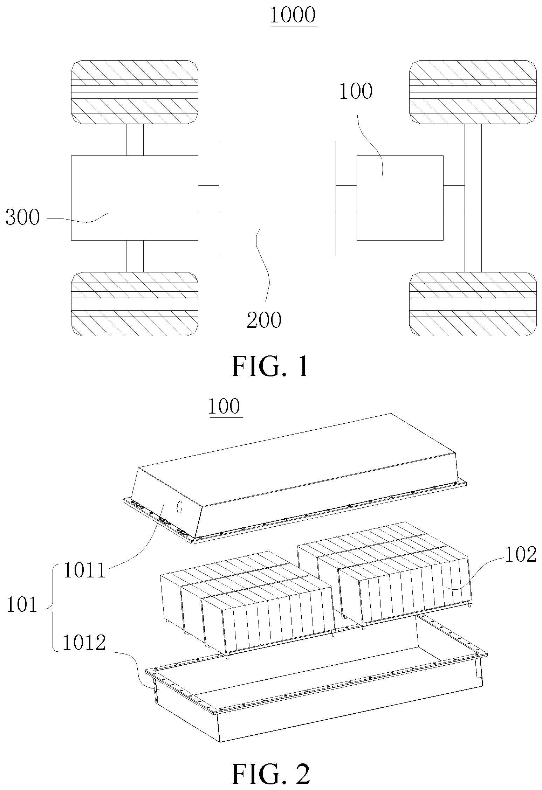

FIG. 1 is a schematic diagram of a structure of a vehicle 1000 according to some embodiments of the present application. A vehicle 1000 may be a fuel powered vehicle, a gas powered vehicle, or a new energy vehicle. The new energy vehicle may be a pure electric vehicle, a hybrid electric vehicle, or an extended range vehicle, and the like. A battery 100 is disposed in the vehicle 1000. The battery 100 can be disposed at a bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to satisfy working electricity requirements during starting, navigation, and traveling of the vehicle 1000.

In some embodiments of the present application, the battery 100 not only can serve as a power supply for operating the vehicle 1000, but can also serve as a power supply for driving the vehicle 1000, in place of or partially in place of fuel or natural gas, to provide driving power for the vehicle 1000.

FIG. 2 is an exploded view of a structure of a battery 100 according to some embodiments of the present application. The battery 100 includes a box 101 and a plurality of battery cells 102. The battery cells 102 are accommodated in the box 101. The box 101 is configured to provide an accommodating space for the battery cells 102. The box 101 may be in a plurality of structures. In some embodiments, the box 101 may include a first box body 1011 and a second box body 1012. The first box body 1011 and the second box body 1012 cover each other, and the first box body 1011 and the second box body 1012 jointly define the accommodating space for accommodating the battery cells 102. The second box body 1012 may be a hollow structure with one end being open. The first box body 1011 may be in a plate-shaped structure, and the first box body 1011 covers an opening side of the second box body 1012, so that the first box body 1011 and the second box body 1012 jointly define the accommodating space. Alternatively, both the first box body 1011 and the second box body 1012 can be a hollow structure with one side being open, and an opening side of the first box body 1011 covers an opening side of the second box body 1012. Certainly, the box 101 formed by the first box body 1011 and the second box body 1012 may be in a plurality of shapes, such as a cylinder, and a cuboid.

In the battery 100, the plurality of battery cells 102 can be connected in series, parallel, or series-parallel. The series-parallel connection means that both the series connection and the parallel connection exist among the plurality of battery cells 102. The plurality of battery cells 102 may be directly connected in series, parallel, or series-parallel together, and then the whole formed by the plurality of battery cells 102 may be accommodated in the box 101. Certainly, the battery 100 may also be in the form of a battery module formed by the plurality of battery cells 102 that are first connected in series, parallel, or series-parallel. The plurality of battery modules are then connected in series, parallel, or series-parallel to form a whole and are accommodated in the box 101. The battery 100 may further include other structures, for example, the battery 100 may further include a bus component for implementing the electrical connection between the plurality of battery cells 102.

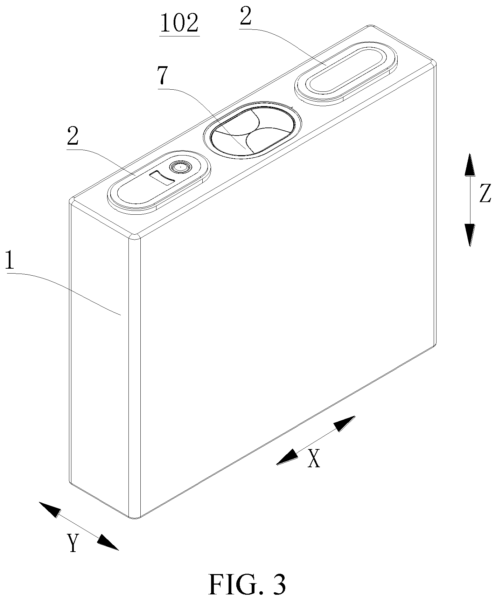

Each battery cell 102 may be a secondary battery or a primary battery, which may also be a lithium-sulfur battery, a sodium-ion battery, or a magnesium-ion battery, but is not limited thereto. The battery cell 102 may be cylindrical, flat, cuboid, or in other shapes. For example, FIG. 3 is a schematic diagram of a structure of a battery cell according to some embodiments of the present application. Referring to the embodiment shown in FIG. 3, a length direction of the battery cell 102 is a first direction X, a width direction of the battery cell 102 is a second direction Y, a height direction of the battery cell 102 is a third direction Z, and every two of the first direction X, the second direction Y, and the third direction Z are perpendicular to each other.

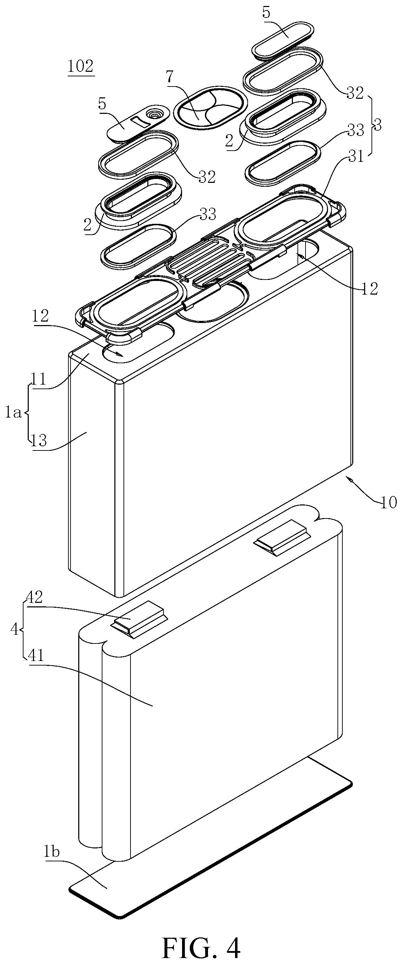

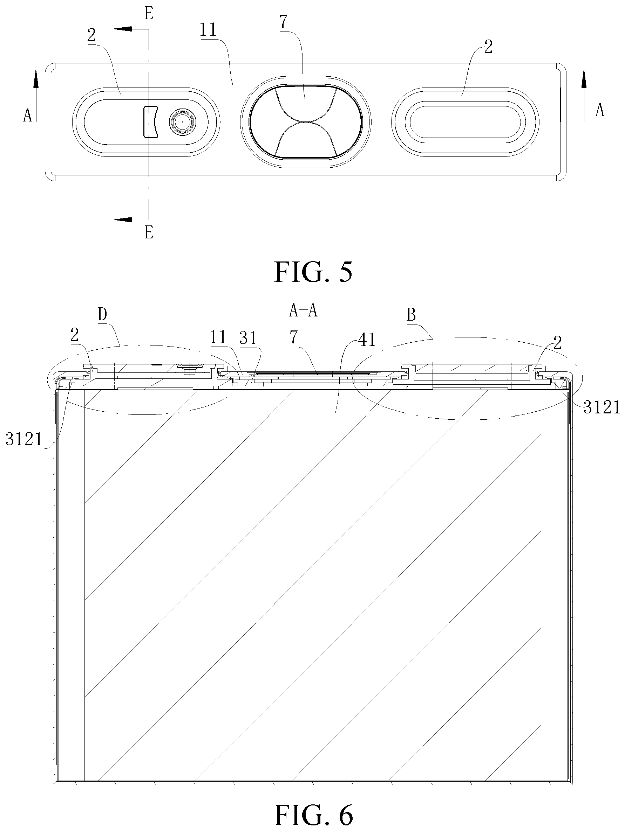

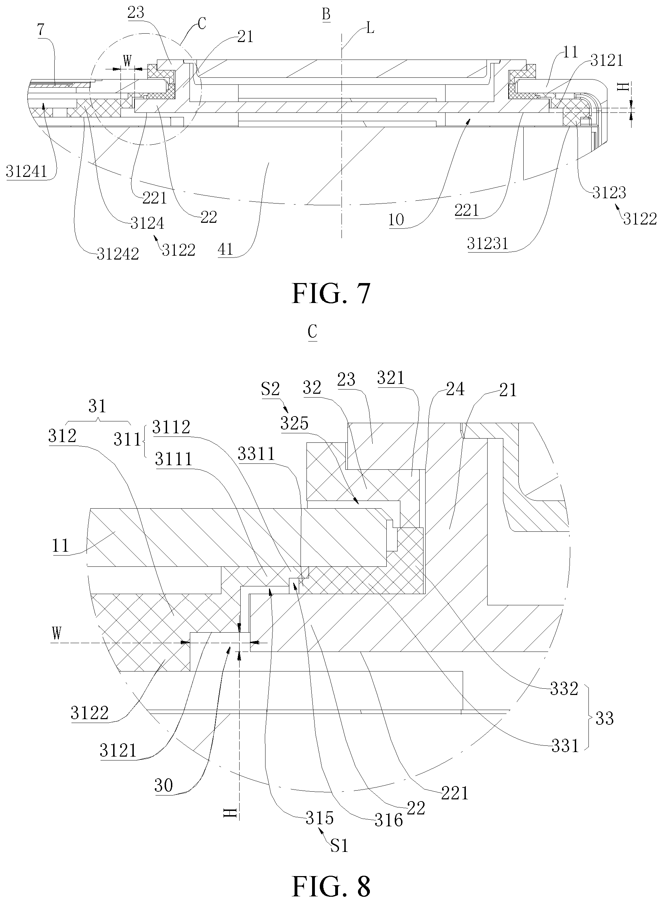

FIG. 4 is an exploded view of a structure of the battery cell 102 shown in FIG. 3. FIG. 5 is a schematic diagram of an orthographic projection of a battery cell 102 according to some embodiments of the present application. FIG. 6 is a cross-sectional view along a line A-A in FIG. 5. FIG. 7 is a partially enlarged view of a part B circled in FIG. 6. In some embodiments of the present application, with reference to FIG. 3, FIG. 4, and FIG. 7, the battery cell 102 includes a housing 1 and a terminal 2. The terminal 2 is disposed on the housing 1, and an accommodating cavity 10 is formed inside the housing 1. For example, the battery cell 102 includes a battery core assembly 4. The battery core assembly 4 may include an active material coating portion 41 and a conductive portion 42 that is connected to the active material coating portion 41. The active material coating portion 41 is received in the accommodating cavity 10, and the conductive portion 42 is welded to the terminal 2, so that the conductive portion 42 is electrically connected between the active material coating portion 41 and the terminal 2. It may be understood that, the active material coating portion 41 may include a current collector coated with an electrode active substance layer, and the conductive portion 42 may include only a tab portion, or may include a tab portion, and an adapter sheet electrically connected to the tab portion, or the like. This is not limited herein.

FIG. 8 is a partially enlarged view of a part C circled in FIG. 7. With reference to FIG. 4 and FIG. 8, the housing 1 includes a first housing wall 11, the first housing wall 11 includes a mounting hole 12, and the terminal 2 passes through the mounting hole 12 to be mounted on the first housing wall 11. The terminal 2 includes a pass-through portion 21. The pass-through portion 21 passes through the mounting hole 12, that is, at least a part of the pass-through portion 21 is located in the mounting hole 12, and an axial direction of the mounting hole 12 (that is, an extension direction of a central axis L of the mounting hole 12 shown in FIG. 7) is used as a projection direction, and a plane perpendicular to the axial direction of the mounting hole 12 is used as a projection plane. A projection of the pass-through portion 21 on the projection plane falls within a projection range of the mounting hole 12 on the projection plane, so that a case in which the pass-through portion 21 passes through the mounting hole 12 can be implemented.

Referring to FIG. 7 and FIG. 8 again, the terminal 2 further includes a first fixing portion 22 and a second fixing portion 23 that are connected to the pass-through portion 21 and that are respectively disposed on two sides of the first housing wall 11 in a wall thickness direction. For example, two side surfaces of the first housing wall 11 in the wall thickness direction are respectively an outer surface and an inner surface. The inner surface is a side surface of the first housing wall 11 facing toward the accommodating cavity 10. The outer surface is a side surface of the first housing wall 11 away from the accommodating cavity 10. A side of the outer surface away from the accommodating cavity 10 is an outer side of the outer surface, and a side of the inner surface that faces toward the accommodating cavity 10 is an inner side of the inner surface. The first fixing portion 22 is connected to the pass-through portion 21 and extends toward a direction away from the central axis L of the mounting hole 12 relative to the pass-through portion 21. The second fixing portion 23 is connected to the pass-through portion 21 and extends toward a direction away from the central axis L of the mounting hole 12 relative to the pass-through portion 21. The first fixing portion 22 extends to the inner side of the inner surface of the first housing wall 11, and the second fixing portion 23 extends to the outer side of the outer surface of the first housing wall 11; or the first fixing portion 22 extends to the outer side of the outer surface of the first housing wall 11, and the second fixing portion 23 extends to the inner side of the inner surface of the first housing wall 11.

In the present application, the first fixing portion 22 and the second fixing portion 23 are disposed on the terminal 2, so that relative positions of the terminal 2 and the first housing wall 11 in an inner direction and an outer direction are fixed. Specifically, the first fixing portion 22 and the second fixing portion 23 respectively abut against and are fixed to the first housing wall 11. The abutment does not require direct contact, and may be indirect contact, as long as abutment has a function of stopping and limiting. Therefore, at least a part of the first fixing portion 22 directly faces the first housing wall 11, to prevent the terminal 2 from moving toward a direction of the second fixing portion 23 relative to the first housing wall 11. At least a part of the second fixing portion 23 directly faces the first housing wall 11, to prevent the terminal 2 from moving toward a direction of the first fixing portion 22 relative to the first housing wall 11. It may be understood that, the axial direction of the mounting hole 12 is used as the projection direction, and the surface perpendicular to the axial direction of the mounting hole 12 is used as the projection surface. A projection of the first fixing portion 22 on the projection surface and a projection of the first housing wall 11 on the projection surface have an intersection region, and a part of the first fixing portion 22 corresponding to the intersection region directly faces the first housing wall 11. A projection of the second fixing portion 23 on the projection surface and the projection of the first housing wall 11 on the projection surface have an intersection region, and a part of the second fixing portion 23 corresponding to the intersection region directly faces the first housing wall 11.

For example, the second fixing portion 23 abuts against the first housing wall 11 through riveting. For example, a form of the first fixing portion 22 obtained before and after assembly between the terminal 2 and the first housing wall 11 is the same. However, a form of the second fixing portion 23 obtained before and after assembly between the terminal 2 and the first housing wall 11 is different. After the terminal 2 is assembled to the mounting hole 12 through the pass-through portion 21, the first fixing portion 22 abuts against the first housing wall 11. A process of flanging riveting is used to manufacture the second fixing portion 23, to implement abutment between the second fixing portion 23 and the first housing wall 11. Therefore, assembly between the terminal 2 and the first housing wall 11 is convenient, and abutment between the terminal 2 and the first housing wall 11 is reliable.

Referring to FIG. 4, FIG. 7, and FIG. 8 again, the battery cell 102 further includes a sealing and insulating assembly 3. The sealing and insulating assembly 3 is in insulation fit between the terminal 2 and the first housing wall 11, that is, at least a part of the sealing and insulating assembly 3 is clamped between the first housing wall 11 and the terminal 2, so that the terminal 2 indirectly cooperates with the first housing wall 11 through the sealing and insulating assembly 3. In this way, insulating and sealing between the first housing wall 11 and the terminal 2 are implemented. The sealing and insulating assembly 3 includes a first insulating member 31 and a second insulating member 32. The first insulating member 31 is disposed on a side of the first housing wall 11 facing toward the first fixing portion 22, and at least a part of the first insulating member 31 is disposed between the first fixing portion 22 and the first housing wall 11, to implement insulating between the first fixing portion 22 and the first housing wall 11. The second insulating member 32 is disposed on a side of the first housing wall 11 facing toward the second fixing portion 23, and at least a part of the second insulating member 32 is disposed between the second fixing portion 23 and the first housing wall 11, to implement insulating between the second fixing portion 23 and the first housing wall 11.

Referring to FIG. 7 and FIG. 8 again, in this embodiment of the present application, the first fixing portion 22 includes a first surface 221 facing away from the first housing wall 11, the first insulating member 31 includes a first part 311 located between the first fixing portion 22 and the first housing wall 11, and a second part 312 located in an outer peripheral region of the first fixing portion 22. The second part 312 includes a relief surface 3121 disposed around the first fixing portion 22. The relief surface 3121 is disposed closer to the first housing wall 11 relative to the first surface 221. In other words, a side surface that is of a part of the second part 312 surrounding the first fixing portion 22 and that is away from the first housing wall 11 is the relief surface 3121. The relief surface 3121 is retracted toward a direction of the first housing wall 11 relative to the first surface 221, so that a side of the relief surface 3121 that is away from the first housing wall 11 may be formed into a first relief space 30.

For example, orientations shown in FIG. 7 and FIG. 8 are introduced. The first fixing portion 22 is located below the first housing wall 11. The second fixing portion 23 is located above the first housing wall 11. A lower surface of the first fixing portion 22 is the first surface 221. The first insulating member 31 is located below the first housing wall 11, and the first part 311 of the first insulating member 31 is located above the first fixing portion 22, so that the first part 311 is located between the first fixing portion 22 and the first housing wall 11. The second part 312 of the first insulating member 31 is located in the outer peripheral region of the first fixing portion 22. A lower surface of the part of the second part 312 that surrounds the first fixing portion 22 is the relief surface 3121, and the relief surface 3121 is higher than the lower surface of the first fixing portion 22, to satisfy a requirement that the relief surface 3121 is disposed close to the first housing wall 11 relative to the first surface 221, so that the first relief space 30 can be formed below the relief surface 3121.

For example, with reference to FIG. 7 to FIG. 9, when the terminal 2 is mounted on the first housing wall 11 in a riveting manner, the first fixing portion 22 may be first supported from bottom to top by using a riveting pin 2000 below the first housing wall 11, and then the second fixing portion 23 is riveted above the first housing wall 11, so that the second fixing portion 23 is stopped by the second insulating member 32. A coverage area of the riveting pin 2000 may be greater than a range of the first fixing portion 22, to ensure that the first fixing portion 22 can be completely covered by the riveting pin 2000, so that even forces are applied to various positions of the first fixing portion 22, and unevenness of the first fixing portion 22 caused by uneven forces after riveting is performed is improved. In addition, because the coverage area of the riveting pin 2000 is relatively large relative to that of the first fixing portion 22, a part of the riveting pin 2000 that is beyond the first fixing portion 22 may correspond to the relief surface 3121 surrounding the first fixing portion 22. In this way, when the riveting pin 2000 moves upward in the riveting process, the part of the riveting pin 2000 that is beyond the first fixing portion 22 may enter the first relief space 30 without extruding the first insulating member 31, so that a problem of fracturing or imprinting formed on the first insulating member 31 is improved, and the first insulating member 31 can be protected.

In short, in the battery cell 102 according to this embodiment of the present application, a side surface that is away from the first housing wall 11 and that is of the part of the first insulating member 31 surrounding the first fixing portion 22 is designed to be the relief surface 3121, to form the first relief space 30 on a side of the relief surface 3121 away from the first housing wall 11. In this way, on the premise that the first fixing portion 22 is completely covered by the riveting pin 2000, the first relief space 30 is used to avoid the part of the riveting pin 2000 that is beyond the first fixing portion 22, to improve a problem of fracturing or imprinting caused by the riveting pin 2000 to the first insulating member 31, so as to protect the first insulating member 31, so that the insulating and sealing reliability between the housing 1 and the terminal 2 is improved, and reliability of the battery cell 102 is improved. In addition, because the first fixing portion 22 can be completely covered by the riveting pin 2000, problems of imprinting formed by the first fixing portion 22 and unqualified flatness that are caused because the first fixing portion 22 cannot be completely pressed by the riveting pin 2000 can be resolved.

Alternatively, a peripheral region of a terminal of an insulating member on a side of the riveting pin 2000 is disposed as a relief step, to implement relief of the part of the riveting pin 2000 that is beyond the terminal 2, so that problems of fracturing and imprinting on the insulating member on the side of the riveting pin 2000 that are caused because the riveting pin 2000 extrudes the insulating member on the side of the riveting pin 2000 when the terminal 2 is riveted. Therefore, on the premise that the first insulating member 31 is protected, the terminal 2 according to this embodiment of the present application can be mounted on the housing 1 in the riveting manner, to improve mounting convenience and stability of the terminal 2. However, it should be noted that, the terminal 2 in the battery cell 102 in this embodiment of the present application is not limited to being mounted in the riveting manner. When the terminal 2 is not mounted in the riveting manner, the first insulating member 31 having the relief surface 3121 in this embodiment of the present application may also be used.

In some embodiments, as shown in FIG. 8, the second part 312 includes a protruding portion 3122 that protrudes toward a direction away from the first housing wall 11 relative to the relief surface 3121, and the relief surface 3121 is disposed between the protruding portion 3122 and the first fixing portion 22. Therefore, the first fixing portion 22 is spaced apart from the protruding portion 3122 through the first relief space 30 formed on the relief surface 3121, to improve a problem that the protruding portion 3122 is extruded by the riveting pin 2000 on the premise that a protruding requirement of the protruding portion 3122 is satisfied. It should be noted that, a function of the protruding portion 3122 is not limited, for example, the protruding portion 3122 may be configured for strengthening, avoidance, and stopping.

For example, orientations shown in FIG. 7 and FIG. 8 are introduced. The first fixing portion 22 is located below the first housing wall 11. The second fixing portion 23 is located above the first housing wall 11. The first insulating member 31 is located below the first housing wall 11, and the first part 311 of the first insulating member 31 is located between the first fixing portion 22 and the first housing wall 11. The second part 312 of the first insulating member 31 is located in the outer peripheral region of the first fixing portion 22 The second part 312 includes the relief surface 3121 and the protruding portion 3122. The protruding portion 3122 protrudes downward relative to the relief surface 3121, that is, a lower surface of the protruding portion 3122 is lower than the relief surface 3121. The relief surface 3121 is located between the protruding portion 3122 and the first fixing portion 22, so that the first relief space 30 formed below the relief surface 3121 can be used for the protruding portion 3122 to be spaced apart from the first fixing portion 22, to improve a case in which the protruding portion 3122 is extruded upward by the riveting pin 2000.

In some embodiments, with reference to FIG. 6 and FIG. 7, the active material coating portion 41 is located on an inner side of the first housing wall 11, the first insulating member 31 is disposed on the inner side of the first housing wall 11, and the protruding portion 3122 includes a first protrusion 3123. The first protrusion 3123 includes a second surface 31231 disposed away from the first housing wall 11, the second surface 31231 is farther away from the first housing wall 11 relative to the first surface 221, and the second surface 31231 abuts against the active material coating portion 41. Therefore, the first insulating member 31 is provided with the first protrusion 3123 to abut against the active material coating portion 41, so that mounting stability of the active material coating portion 41 in the housing 1 can be improved, a risk of a short circuit between active material coating portion 41 and the terminal 2 can be reduced, and the reliability of the battery cell 102 can be further improved.

For example, orientations shown in FIG. 6 and FIG. 7 are introduced. The active material coating portion 41, the first fixing portion 22, and the first insulating member 31 are all located below the first housing wall 11. The first part 311 of the first insulating member 31 is located between the first fixing portion 22 and the first housing wall 11. The second part 312 of the first insulating member 31 is located in the outer peripheral region of the first fixing portion 22, and the second part 312 includes the relief surface 3121 and the first protrusion 3123. The first protrusion 3123 protrudes downward relative to the relief surface 3121. A lower surface of the first protrusion 3123 is the second surface 31231, and the lower surface of the first fixing portion 22 is the first surface 221. The relief surface 3121 is higher than the lower surface of the first fixing portion 22, and the second surface 31231 is lower than the lower surface of the first fixing portion 22 (that is, the second surface 31231 is farther away from the first housing wall 11 relative to the first surface 221). The lower surface of the first fixing portion 22 abuts against an upper surface of the active material coating portion 41, and the lower surface of the first fixing portion 22 is higher than the upper surface of the active material coating portion 41, to improve a short circuit between the terminal 2 and the active material coating portion 41, and improve the reliability of the battery cell 102.

It should be noted that, a quantity of first protrusions 3123 and distribution positions of the first protrusions 3123 are not limited. For example, in some embodiments, a quantity of first protrusions 3123 is more than one and the plurality of first protrusions 3123 are spaced apart, so that abutment of the active material coating portion 41 at a plurality of positions can be implemented. In this way, the mounting stability of the active material coating portion 41 in the housing 1 is further improved, a risk of the short circuit between the active material coating portion 41 and the terminal 2 is further reduced, and the reliability of the battery cell 102 is improved.

For example, a side surface of the active material coating portion 41 facing toward the first housing wall 11 is an abutment surface of the active material coating portion 41, and the plurality of first protrusions 3123 may be spaced apart along a contour line of the abutment surface of the active material coating portion 41, so that a more reliable abutting and limiting effect can be achieved.

Certainly, the present application is not limited thereto. For example, in another embodiment of the present application, the first protrusion 3123 may also be processed to be circular and abuts against the active material coating portion 41.

In some embodiments, with reference to FIG. 6 and FIG. 7, the first housing wall 11 is provided with a pressure relief structure 7. The protruding portion 3122 includes a second protrusion 3124, and the second protrusion 3124 forms, at a position corresponding to the pressure relief structure 7, a cavity 31241 that is open toward a direction of the pressure relief structure 7. Therefore, the first insulating member 31 is provided with the second protrusion 3124 to define the cavity 31241, so that the first insulating member 31 is not tightly attached to the pressure relief structure 7. Instead, there may be a specific space between the first insulating member 31 and the pressure relief structure 7, so that generated air can enter the cavity 31241, to improve reliability of opening a valve of the pressure relief structure 7 for pressure relief, and improve operating reliability of the battery cell 102.

For example, orientations shown in FIG. 6 and FIG. 7 are introduced. Both the first fixing portion 22 and the first insulating member 31 are located below the first housing wall 11. The first part 311 of the first insulating member 31 is located between the first fixing portion 22 and the first housing wall 11. The second part 312 of the first insulating member 31 is located in the outer peripheral region of the first fixing portion 22. The second part 312 includes the relief surface 3121 and the second protrusion 3124. The second protrusion 3124 protrudes downward relative to the relief surface 3121. The second protrusion 3124 forms, at the position corresponding to the pressure relief structure 7, the cavity 31241 that is open upward. Therefore, there may be a specific space between an upper surface of the first insulating member 31 and a lower surface of the pressure relief structure 7, to improve a case in which the first insulating member 31 is tightly attached to the pressure relief structure 7, so that the reliability of valve opening of the pressure relief structure 7 for pressure relief is improved, and the operating reliability of the battery cell 102 is improved.

It should be noted that, a specific form of the pressure relief structure 7 is not limited. For example, the pressure relief structure 7 may be an anti-explosion valve assembled on the first housing wall 11, or a structure having scores that is obtained by processing a local part of first housing wall 11. In addition, "a position of the second protrusion 3124 corresponding to the pressure relief structure 7" should be understood in a broad sense. The position may be at least a part of a region covered by an orthographic projection of the pressure relief structure 7 on the first insulating member 31.

For example, as shown in FIG. 6 and FIG. 7, the second protrusion 3124 includes a third surface 31242 disposed away from the first housing wall 11, and the third surface 31242 is disposed farther away from the first housing wall 11 relative to the first surface 221, or is flush with the first surface 221. Therefore, a side surface of the second protrusion 3124 away from the first housing wall 11 is disposed farther away from the first housing wall 11 relative to the first surface 221 or is flush with the first surface 221, so that the second protrusion 3124 can protrude toward a direction away from the first housing wall 11 by a larger distance. In this way, when it is ensured that a wall thickness of the second protrusion 3124 is not excessively thin, a relatively deep cavity 31241 can be formed, to balance structural reliability of the first insulating member 31 and the reliability of valve opening of the pressure relief structure 7 for pressure relief.

For example, orientations shown in FIG. 6 and FIG. 7 are introduced. Both the first fixing portion 22 and the first insulating member 31 are located below the first housing wall 11. The first part 311 of the first insulating member 31 is located between the first fixing portion 22 and the first housing wall 11. The second part 312 of the first insulating member 31 is located in the outer peripheral region of the first fixing portion 22. The second part 312 includes the relief surface 3121 and the second protrusion 3124. The second protrusion 3124 protrudes downward relative to the relief surface 3121. The lower surface of the second protrusion 3124 is the third surface 31242. The lower surface of the first fixing portion 22 is the first surface 221. The third surface 31242 is lower than the first surface 221 (that is, the third surface 31242 is disposed farther away from the first housing wall 11 relative to the first surface 221), or the third surface 31242 is flush with the first surface 221 and the third surface 31242 and the first surface 221 are of equal heights. In this way, when it is ensured that the wall thickness of the second protrusion 3124 is not excessively thin in an upward or downward direction, a depth of the cavity 31241 formed above the second protrusion 3124 in the upward or downward direction may be relatively large, so that the reliability of valve opening of the pressure relief structure 7 for pressure relief is improved. In addition, because a wall thickness of the first insulating member 31 at the second protrusion 3124 is not excessively thin, reliability of an entire structure of the first insulating member 31 can be improved.

In some embodiments of the present application, the protruding portion 3122 may include both the first protruding portion 3123 in any one of the foregoing embodiments and the second protrusion 3124 in any one of the foregoing embodiments, and details are not described herein again.

In some embodiments, referring to FIG. 7 and FIG. 8, the relief surface 3121 enables a spacing distance W between the first fixing portion 22 and the protruding portion 3122 to be greater than or equal to 1 mm, that is, a size of the first relief space 30 in a spacing direction of the first fixing portion 22 and the protruding portion 3122 is greater than or equal to 1 mm. Therefore, the relief surface 3121 is disposed, so that the spacing distance between the first fixing portion 22 and the protruding portion 3122 is greater than or equal to 1 mm, and a larger space can be reserved to enable the coverage range of the riveting pin 2000 to be sufficiently greater than the range of the first fixing portion 22. In this way, when a requirement of a fixture positioning tolerance is satisfied, a requirement for completely covering the first fixing portion 22 by the riveting pin 2000 is satisfied, and the spacing distance between the first fixing portion 22 and the protruding portion 3122 is sufficient for relief, to improve a case in which the riveting pin 2000 extrudes the protruding portion 3122 during riveting, so that a problem of fracturing or imprinting on the first insulating member 31 is improved.

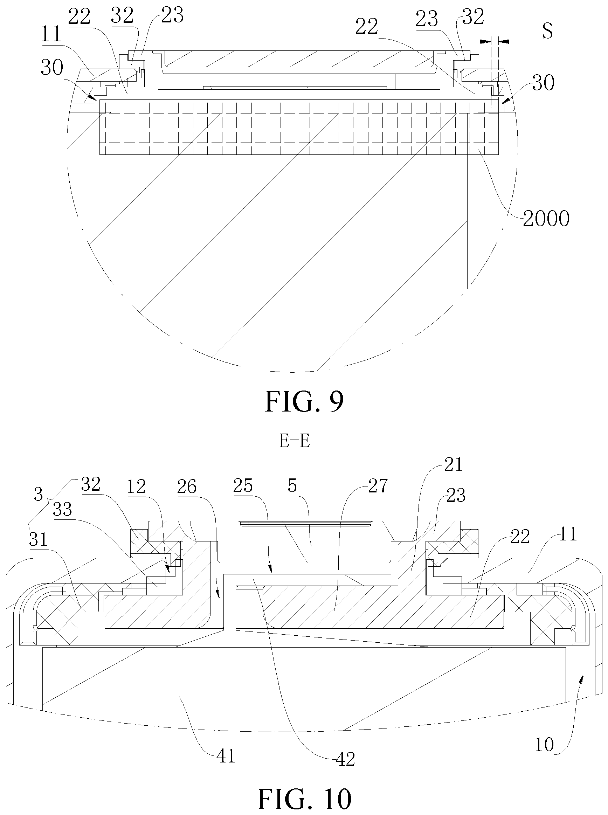

With reference to FIG. 9, considering the fixture positioning tolerance in the riveting process, a case in which the first fixing portion 22 cannot be completely covered by the riveting pin 2000 due to tolerance positioning is improved. Therefore, the coverage range of the riveting pin 2000 can be set to exceed the range of the first fixing portion 22. For example, a size S of the riveting pin 2000 that is beyond the first fixing portion 22 may be set to be greater than or equal to 0.5 mm, to better satisfy the requirement for completely covering the first fixing portion 22 by the riveting pin 2000, that is, the first fixing portion 22 can be completely pressed by the riveting pin 2000 in a reliable manner. Based on the design, the size of the relief surface 3121 is set, so that the spacing distance W between the first fixing portion 22 and the protruding portion 3122 is greater than or equal to 1 mm. In this way, when the size S of the riveting pin 2000 that is beyond the first fixing portion 22 is set to be greater than or equal to 0.5 mm, a part of the riveting pin 2000 that is beyond the first fixing portion 22 may correspond to the first relief space 30, to effectively improve the problem that the riveting pin 2000 extrudes the protruding portion 3122. In addition, it should be noted that, because the protruding portion 3122 may include a plurality of forms of protrusions, an upper limit of the distance between the first fixing portion 22 and the protruding portion 3122 may be set according to an actual condition, and details are not described herein again.

In some embodiments, referring to FIG. 7, a height difference H between the relief surface 3121 and the first surface 221 is greater than or equal to 0.5 mm. It may be understood that, the height difference H refers to a size parallel to an axis direction of the terminal 2. It may be understood that, in the riveting process, the riveting pin 2000 needs to move toward a direction of the relief surface 3121 by a specific distance. The height difference H between the relief surface 3121 and the first surface 221 is set to be greater than or equal to 0.5 mm, so that there is a sufficient height space to avoid the riveting pin 2000, and relief of the riveting pin 2000 is implemented when a riveting requirement of the terminal 2 is satisfied. In this way, the first insulating member 31 is protected.

In addition, an upper limit of the height difference H between the relief surface 3121 and the first surface 221 may be defined according to the wall thickness of the first insulating member 31. For example, in some embodiments, the height difference H between the relief surface 3121 and the first surface 221 may be further less than or equal to 1 mm, so that on the premise that the wall thickness of the first insulating member 31 is relatively common, an excessively thin wall thickness of the first insulating member 31 at the step surface can be effectively improved, which is conducive to improving the structural reliability of the first insulating member 31.

In some embodiments of the present application, referring to FIG. 8, the battery cell 102 further includes: a second insulating member 32 and an insulating and sealing member 33. The second insulating member 32 is disposed on a side of the first housing wall 11 facing toward the second fixing portion 23, and at least a part of the second insulating member 32 is clamped between the second fixing portion 23 and the first housing wall 11. The insulating and sealing member 33 is disposed between the first housing wall 11 and the terminal 2, and is located on a side of the second insulating member 32 close to the first fixing portion 22, and a side of the first insulating member 31 close to the pass-through portion 21. The insulating and sealing member 33 is an elastic member and is elastically compressed to be sealed between the first fixing portion 22 and the first housing wall 11.

In the foregoing technical solution, after the terminal 2 and the first housing wall 11 are assembled in place, the insulating and sealing member 33 is extruded by the first fixing portion 22 and the first housing wall 11 and presents a compressed state, so that a sealing portion 331 can be tightly attached to the first fixing portion 22 and the first housing wall 11 under the action of an elastic force of the sealing portion 331, to implement sealing between the housing 1 and the terminal 2. In this way, insulating and sealing between the first housing wall 11 and the terminal 2 are implemented. In addition, because the insulating and sealing member 33 is also made of an insulating material, the first fixing portion 22 may be insulated from the first housing wall 11 through the first insulating member 31, and the second fixing portion 23 may be insulated from the first housing wall 11 through the second insulating member 32 and the insulating and sealing member 33, so that insulating and sealing performance between the housing 1 and the terminal 2 can be improved.

In some embodiments of the present application, referring to FIG. 8, the first insulating member 31 is located on the inner side of the first housing wall 11; the first relief space 30 is formed on a side of the relief surface 3121 away from the first housing wall 11; a first channel S1 that is in communication with the first relief space 30 is formed between the first insulating member 31 and the first fixing portion 22; a second channel S2 that is in communication with the outside of the housing 1 is formed between the second insulating member 32 and the second fixing portion 23 or the first housing wall 11; and a communication position between the second channel S2 and the first channel S1 is blocked by the insulating and sealing member 33.

Specifically, because the insulating and sealing member 33 is disposed between the first housing wall 11 and the terminal 2, and is located on a side of the second insulating member 32 close to the first fixing portion 22, and is located on a side of the first insulating member 31 close to the pass-through portion 21, a position of the insulating and sealing member 33 is relatively concealed, and it is difficult to directly find whether the insulating and sealing member 33 is omitted from being mounted by observation. In this embodiment, the second channel S2 and the first channel S1 are disposed, so that whether the insulating and sealing member 33 is omitted from being mounted can be found by detecting whether the second channel S2 is in communication with the first channel S1 through ventilation, so that the terminal 2 and the first housing wall 11 can be sealed in a reliable manner.

For example, during detection, detection air such as helium may be introduced into the inside of the housing 1, and then a concentration change of helium in the air is detected from an outer side of the housing 1, to determine whether the second channel S2 is in communication with the first channel S1. If the concentration is almost unchanged, it indicates that the communication position between the second channel S2 and the first channel S1 is blocked by the insulating and sealing member 33, the insulating and sealing member 33 is already mounted in place, and the second channel S2 is not in communication with the first channel S1. In this way, the helium introduced into the inside of the housing 1 does not leak to the outside of the housing 1 along the first channel S1 and the second channel S2. However, if the concentration changes greatly, it indicates that the communication position between the second channel S2 and the first channel S1 is not blocked by the insulating and sealing member 33, the insulating and sealing member 33 is omitted from being mounted, and the second channel S2 and the first channel S1 present a communicated state. In this way, the helium introduced into the inside of the housing 1 leaks to the outside of the housing 1 along the first channel S1 and the second channel S2.

In some embodiments of the present application, referring to FIG. 8, the first insulating member 31 includes a first groove 315 that is open toward the first fixing portion 22, and the first groove 315 defines at least a part of the first channel S1. The second insulating member 32 includes a second groove 325 that is open toward the first housing wall 11, and the second groove 325 defines at least a part of the second channel S2. Therefore, the first groove 315 is processed on the first insulating member 31 and the second groove 325 is processed on the second insulating member 32, so that the first channel S1 and the second channel S2 can be simply and conveniently constructed, processing and assembly difficulty can be reduced, and production efficiency can be enhanced. Certainly, the present application is not limited thereto. For example, in another embodiment of the present application, a groove can be processed on the terminal 2 or the first housing wall 11, to obtain the first channel S1 or the second channel S2.

In some embodiments of the present application, both a groove depth of the first groove 315 and a groove depth of the second groove 325 range from 0.2 mm to 0. 35 mm, for example, 0.2 mm, 0.25 mm, 0.3 mm, and 0.35 mm, and both a groove width of the first groove 315 and a groove width of the second groove 325 range from 0.2 mm to 0. 5 mm, for example, 0.2 mm, 0.25 mm, 0.3 mm. 0.35 mm, 0.4 mm, 0.45 mm, and 0.5 mm. It may be understood that, a flow direction of an airflow in the first channel S1 is a direction of a groove length of the first groove 315, and a flow direction of an airflow in the second channel S2 is a direction of a groove length of the second groove 325. The groove depth and the groove width of the first groove 315 and the second groove 325 are defined as above, so that both a processing requirement and a detection requirement can be satisfied.

In some embodiments of the present application, referring to FIG. 8, the terminal 2 is surrounded by a plurality of first channels S1 that are spaced apart and a plurality of second channels S2 that are spaced apart, and positions of the plurality of first channels S1 and positions of the plurality of second channels S2 are in one-to-one correspondence. Therefore, a risk that a single channel is blocked by a foreign object and cannot be normally detected can be reduced, and mounting omission detection of the insulating and sealing member can be successfully and reliably performed. Certainly, the present application is not limited thereto. For example, in another embodiment of the present application, at least one of the first channels S1 and the second channels S2 may be further processed into an annular channel or the like that is disposed around an entire periphery of the terminal 2.

In some embodiments of the present application, referring to FIG. 8, first channels S1 are respectively provided on two opposite sides of the terminal 2. A quantity of second channels S2 is the same as a quantity of first channels S1, and positions of the second channels S2 correspond to positions of the first channels S1. For example, the first channels S1 may be respectively provided on two opposite sides of a cross section of the terminal 2 in a length direction, or the first channels S1 may be further respectively provided on two opposite sides of a cross section of the terminal 2 in a width direction.

Therefore, it is conducive to implementing non-directional mounting of the first insulating member 31 and the first insulating member 32, that is, foolproof operation can be implemented, so that assembly difficulty is reduced and assembly efficiency is enhanced. It should be noted that, if only one first channel S1 is provided (for example, the first groove 315 is provided only on one side of the cross section of the terminal 2 in the length direction by the first insulating member 31), and only one second channel S2 is provided (for example, the second groove 325 is provided only on one side of the cross section of the terminal 2 by the second insulating member 32), and if one of the first insulating member 31 and the first insulating member 32 is mounted on an opposite side (as a result, the first groove 315 and the second groove 325 are respectively provided on the two sides of the cross section of the terminal 2 in the length direction), the positions of the first channel S1 cannot correspond to the positions of the second channel S2, which leads to a problem that mounting omission detection cannot be performed.

In some embodiments of the present application, referring to FIG. 8, the insulating and sealing member 33 includes the sealing portion 331 disposed between the first fixing portion 22 and the first housing wall 11. The sealing portion 331 is disposed close to the pass-through portion 21 relative to the first part 311, and is elastically compressed to be in sealing fit between the first fixing portion 22 and the first housing wall 11. The insulating and sealing member 33 further includes an insulating portion 332 disposed between the pass-through portion 21 and the first housing wall 11, and one end of the insulating portion 332 away from the first fixing portion 22 abuts against the second insulating member 32. Therefore, insulating performance between the first housing wall 11 and the terminal 2 can be improved, and the problem of the short circuit is improved.

In some embodiments of the present application, referring to FIG. 8, the first part 311 includes a first section portion 3111 and a second section portion 3112. The first section portion 3111 is clamped between the first fixing portion 22 and the first housing wall 11. The second section portion 3112 is connected to a side of the first section portion 3111 close to the pass-through portion 21, and the second section portion 3112 and the first fixing portion 22 are spaced apart, to form a second relief space 316 between the second section portion 3112 and the first fixing portion 22. A local part 3311 of the insulating and sealing member 33 (for example, the sealing portion 331) extends into the second relief space 316.

Therefore, the second relief space 316 is disposed, so that the insulating and sealing member 33 can be fully compressed, to seal a gap between the first fixing portion 22 and the first housing wall 11 in a reliable manner, so as to improve the sealing fit performance between the housing 1 and the terminal 2.

In some embodiments of the present application, as shown in FIG. 10, the battery cell 102 includes an accommodating cavity 10 formed on the inner side of the first housing wall 11; the accommodating groove 25 that is open toward a direction away from the accommodating cavity 10 is formed on the terminal 2; the terminal 2 includes the communication hole 26; and the communication hole 26 passes through a side groove wall that is of the accommodating groove 25 and that is close to the accommodating cavity 10 and is in communication with the accommodating cavity 10 and the accommodating groove 25. For example, when the pass-through portion 21 is annular, the accommodating groove 25 is located in an inner ring region of the pass-through portion 21. For example, the accommodating groove 25 can be jointly defined by the pass-through portion 21 and a support portion 27 located in the inner ring region of the pass-through portion 21.

Therefore, when an electrolyte solution is injected into the battery cell 102, the electrolyte solution can be injected into the accommodating groove 25, and then flows toward the accommodating cavity 10 through the communication hole 26. The accommodating groove 25 can temporarily store the electrolyte solution, to improve problems of splashing and overflowing of the electrolyte solution. In addition, to some extent, a side wall of the accommodating groove 25 (that is, a groove wall extending from a notch of the accommodating groove 25 to a direction of the accommodating cavity 10) can prevent the electrolyte solution from splashing out, reduce pollution caused by the electrolyte solution to the outside, and facilitate quick liquid injection. In addition, because there is no need to separately provide a liquid injection channel on the housing 1, special processing does not need to be performed on the housing 1, which is conducive to reducing structural complexity and processing difficulty of the housing 1.

In some embodiments of the present application, as shown in FIG. 10, the battery cell 102 includes a battery core assembly 4. The battery core assembly 4 includes an active material coating portion 41 received in the accommodating cavity 10, and a conductive portion 42 connected to the active material coating portion 41. The conductive portion 42 passes through the communication hole 26 to be at least partially received in the accommodating groove 25.

It should be noted that, there may be one or more communication holes 26, and the conductive portion 42 can pass through at least one of the communication holes 26. For example, at least one communication hole 26 can pass through the electrolyte solution. For example, at least one communication hole 26 is vacant (that is, the communication hole 26 does not pass through the conductive portion 42), so that the at least one communication hole 26 can pass through the electrolyte solution without being impeded by the conductive portion 42. For another example, at least one communication hole 26 can still pass through the electrolyte solution after the at least one communication hole 26 passes through the conductive portion 42.

Therefore, the conductive portion 42 is at least partially received in the accommodating groove 25, and as a result, at least a part of the conductive portion 42 occupies a space in the accommodating groove 25, so that the space occupied by the conductive portion 42 in the accommodating cavity 10 can be reduced, and a space in the accommodating cavity 10 can be saved to receive the active material coating portion 41 of a larger volume, which is conducive to improving an energy density of the battery cell 102, or is conducive to reducing a size of the battery cell 102 when the energy density of the battery cell 102 is not changed.

In some embodiments, the conductive portion 42 is welded to the terminal 2 to form an electrical connection, so that electrode output of the battery core assembly 4 from the terminal 2 is implemented. For example, as shown in FIG. 10, the conductive portion 42 is welded to a side groove wall of the accommodating groove 25 close to the accommodating cavity 10, so that cooperation compactness can be improved, and welding operation between the conductive portion 42 and the accommodating groove 25 can be facilitated. Certainly, the present application is not limited thereto. In another embodiment, the conductive portion 42 may also be disposed to be welded to a terminal cover plate 5 mentioned below, to form an electrical connection. This is not limited herein.

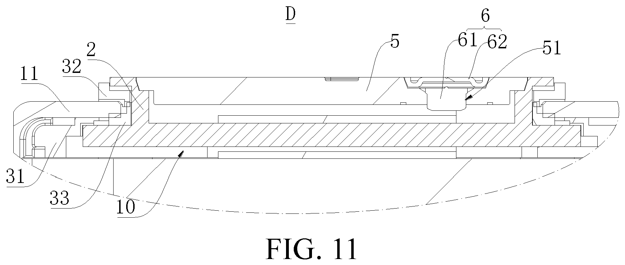

In some embodiments, as shown in FIG. 10 and FIG. 11, the battery cell 102 includes the terminal cover plate 5 that covers the accommodating groove 25. A liquid injection hole 51 that can be in communication with the accommodating groove 25 is formed on the terminal cover plate 5. The battery cell 102 further includes a sealing structure 6 that is configured to seal the liquid injection hole 51. In this way, when the electrolyte solution needs to be injected into the battery cell 102, the sealing structure 6 is not mounted on the liquid injection hole 51 first, or the sealing structure 6 is in a state in which the liquid injection hole 51 is opened. In this case, the electrolyte solution can be injected into the accommodating groove 25 through the liquid injection hole 51. In addition, after liquid injection is performed, the sealing structure 6 can be mounted on the liquid injection hole 51, or the sealing structure 6 is switched to be in a state in which the liquid injection hole 51 is closed, so that the liquid injection hole 51 is sealed and closed, to prevent the electrolyte solution from overflowing and prevent an external foreign object from entering the accommodating cavity 10 through the liquid injection hole 51. In this way, the reliability of the battery cell 102 is improved.

Therefore, the liquid injection hole 51 is provided on the terminal cover plate 5, and an opening is relatively small and is provided at an outer position, so that a liquid injection inlet can be sealed relatively easily through the sealing structure 6 in a reliable manner, the operating reliability of the battery cell 102 can be improved, and flexible and diversified design of the sealing structure 6 can be implemented.

In some embodiments, as shown in FIG. 11, the terminal cover plate 5 does not include a part that is stopped at an outer side (that is, a side away from the accommodating cavity 10) of the sealing structure 6, so that the sealing structure 6 is suitable for being mounted on the terminal cover plate 5 from the outer side (that is, the side away from the accommodating cavity 10) of the terminal cover plate 5. In this way, the sealing structure 6 is disposed to be mounted on the terminal cover plate 5 from the outer side of the terminal cover plate 5, to seal the liquid injection hole 51, so that the sealing structure 6 is mounted after liquid injection is performed. Therefore, sealing performance of the liquid injection hole 51 can be ensured, and a mounting position is close to the outer side, which facilitates a quick assembly of the sealing structure 6. In addition, mounting of the sealing structure 6 does not affect a connection between the terminal 2 and the terminal cover plate 5, thereby ensuring connection reliability between the terminal cover plate 5 and the terminal 2.

The sealing structure 6 may be in a detachable form, or may be in a non-detachable and fixed form. For example, when the sealing structure 6 is in the detachable form, the detachable form is conducive to maintenance of the liquid injection hole 51. For example, when the electrolyte solution needs to be supplemented, the sealing structure 6 may be disassembled, the liquid injection hole 51 is opened, the electrolyte solution is supplemented by being injected into the accommodating cavity 10 through the liquid injection hole 51, and then the sealing structure 6 is assembled back in place. For example, the sealing structure 6 may be detachably connected to the terminal cover plate 5 by using a thread, a rigging screw, or the like, to facilitate disassembly and assembly.

For example, when the sealing structure 6 is in the non-detachable and fixed form, the sealing structure 6 can be fixed on the terminal cover plate 5 in a welding manner, a riveting manner, or the like, so that sealing reliability of the sealing structure 6 to the liquid injection hole 51 is improved. For example, the liquid injection hole 51 may be in a multi-segment form. The sealing structure 6 may include a first sealing member 61 that is in interference fit with the liquid injection hole 51, and a second sealing member 62 that covers a part that is beyond the first sealing member 61 and that is welded to the terminal cover plate 5. Alternatively, in some embodiments, the second sealing member 62 may be disposed to be detachably connected to the terminal cover plate 5 by using the rigging screw, so that the first sealing member 61 is limited at a position at which the first sealing member 61 is in interference fit with the liquid injection hole 51.

In some embodiments of the present application, as shown in FIG. 11, at least a part of the sealing structure 6 is embedded in the liquid injection hole 51. In other words, the sealing structure 6 can be completely embedded in the liquid injection hole 51, or only a part of the sealing structure 6 can be embedded in the liquid injection hole 51. Therefore, a space in the liquid injection hole 51 can be fully used, to improve the sealing reliability of the sealing structure 6 to the liquid injection hole 51. In addition, a height of the sealing structure 6 that protrudes outside the liquid injection hole 51 can be reduced, to reduce a space outside the terminal cover plate 5 that is occupied by the sealing structure 6, which is conducive to reducing interference impact on a bus component, increasing a connection area between the bus component and the terminal cover plate 5, and enhancing overcurrent efficiency.

In some embodiments of the present application, as shown in FIG. 5 and FIG. 6, a plurality of terminals 2 are disposed on the first housing wall 11, and the second part 312 includes the relief surfaces 3121 that are respectively disposed around each first fixing portion 22. Therefore, the plurality of terminals 2 on the first housing wall 11 can be mounted in a riveting manner, and during mounting of each terminal 2, a problem of fracturing or imprinting on a first insulating member 31 is not easily caused, thereby further improving reliability of the first insulating member 31.

For example, a quantity of terminals 2 on the first housing wall 11 is two, which are respectively a first terminal and a second terminal whose polarities are opposite, that is, one of the first terminal and the second terminal is a positive electrode terminal, and the other of the first terminal and the second terminal is a negative electrode terminal. Both the two terminals are mounted on the first housing wall 11, which is conducive to enhancing the production efficiency of the battery cell 102.

In some embodiments of the present application, as shown in FIG. 4, the housing 1 includes a housing body 1a and an end cover 1b. The housing body 1a defines an accommodating cavity 10 that is open toward a direction of the end cover 1b. The end cover 1b covers an opening of the accommodating cavity 10. A first housing wall 11 is a wall portion that is of the housing body 1a that is disposed opposite to the end cover 1b. For example, the housing body 1a further includes a second housing wall 13. The second housing wall 13 extends toward a direction of the end cover 1b relative to the first housing wall 11, so that the accommodating cavity 10 is defined between the first housing wall 11 and the second housing wall 13, and the first housing wall 11 and the second housing wall 13 are integrally formed. Therefore, the structure of the housing 1 is simple and the housing 1 is easy to be processed, and the terminal 2 is disposed on a side of the housing body 1a that is opposite to the end cover 1b, so that a connection position between the housing body 1a and the end cover 1b can be away from the terminal 2. Certainly, the present application is not limited thereto. For example, in another embodiment of the present application, the end cover 1b may alternatively be used as the first housing wall 11, and the terminal 2 is mounted on the end cover 1b.

In some embodiments of the present application, as shown in FIG. 4, FIG. 6, and FIG. 7, the accommodating cavity 10 is formed in the housing 1, the first fixing portion 22 is located on a side of the first housing wall 11 facing toward the accommodating cavity 10, and the second fixing portion 23 is riveted to the first housing wall 11. Therefore, riveting can be performed from an outer side of the housing body 1a, which facilitates riveting operation.

For example, because the first insulating member 31 may be an insulating member disposed on the inner side of the first housing wall 11, the protruding portion 3122 can be disposed on the insulating member on the inner side of the first housing wall 11, to abut against the active material coating portion 41, avoid the pressure relief structure 7, or the like. In this case, the relief surface 3121 surrounding the first fixing portion 22 is disposed on the first insulating member 31, to protect the protruding portion 3122.

According to an embodiment of a second aspect of the present application, an embodiment of the present application further provides a battery 100, including the battery cell 102 according to any one of the foregoing solutions. It should be noted that, the battery 100 according to this embodiment of the present application may include a box 101 or may not include a box 101. Therefore, reliability of the battery cell 102 according to this embodiment of the present application is improved, which is conducive to improving performance of the battery 100.

For example, the battery 100 may further include a bus component. There are a plurality of battery cells 102, and at least two battery cells 102 are electrically connected through the bus component. Therefore, the plurality of battery cells 102 can be connected in series and/or connected in parallel. For example, when the plurality of battery cells 102 are connected in series, a terminal cover plate 5 of an anode of one battery cell 102 is connected to a terminal cover plate 5 of a cathode of a next battery cell 102 through a bus component. In addition, a terminal cover plate 5 of a cathode of the battery cell 102 is connected to a terminal cover plate 5 an anode of a previous battery cell 102 through another bus component.

According to an embodiment of a third aspect of the present application, an embodiment of the present application further provides a power consuming apparatus, including the battery 100 according to any one of the foregoing solutions. The battery 100 is configured to provide electric energy for the power consuming apparatus. The power consuming apparatus may be any one of the foregoing devices or systems to which the battery 100 is applied. Performance of the battery 100 is improved, which is conducive to improving operating power consuming performance of the power consuming apparatus.

The following describes a battery cell 102 according to a specific embodiment of the present application.

The battery cell 102 includes: a housing 1, a terminal 2, and a sealing and insulating assembly 3. The housing 1 includes a housing body 1a and an end cover 1b. The housing body 1a defines an accommodating cavity 10 that is open toward a direction of the end cover 1b. The end cover 1b covers an opening of the accommodating cavity 10. A wall portion of the housing body 1a that is disposed opposite to the end cover 1b is a first housing wall 11. Two terminals 2 are disposed on the first housing wall 11, which are respectively a positive electrode terminal and a negative electrode terminal. The terminal 2 includes a pass-through portion 21 that passes through the first housing wall 11, and a first fixing portion 22 and a second fixing portion 23 that are connected to the pass-through portion 21 and that are respectively disposed on an inner side and an outer side of the first housing wall 11. The sealing and insulating assembly 3 includes a first insulating member 31, a second insulating member 32, and an insulating and sealing member 33. The first insulating member 31 is disposed on an inner side of the first housing wall 11, the second insulating member 32 is disposed on an outer side of the first housing wall 11, and the insulating and sealing member 33 is disposed on a side of the first insulating member 31 close to the pass-through portion 21. The first insulating member 31 includes a first part 311 located between the first fixing portion 22 and the first housing wall 11, and a second part 312 located in an outer peripheral region of the first fixing portion 22.

The second part 312 includes a relief surface 3121 disposed around the first fixing portion 22. When the first housing wall 11 is used as a top wall of the housing 1, a lower surface of the first fixing portion 22 is a first surface 221, and the relief surface 3121 is higher than the first surface 221. The second part 312 further includes a protruding portion 3122 that protrudes downward relative to the relief surface 3121. The relief surface 3121 is disposed between the protruding portion 3122 and the first fixing portion 22. The protruding portion 3122 includes a first protrusion 3123. A lower surface of the first protrusion 3123 abuts against an active material coating portion 41. A pressure relief structure 7 is disposed on the first housing wall 11. The protruding portion 3122 further includes a second protrusion 3124, and the second protrusion 3124 forms, at a position corresponding to the pressure relief structure 7, a cavity 31241 that is open upward.

Therefore, a side surface that is away from the first housing wall 11 and that is of a part of the first insulating member 31 surrounding the first fixing portion 22 is designed to be the relief surface 3121, to form a first relief space 30 on a side of the relief surface 3121 away from the first housing wall 11. In this way, on the premise that the first fixing portion 22 is completely covered by a riveting pin 2000, the first relief space 30 is used to avoid a part of the riveting pin 2000 that is beyond the first fixing portion 22, to improve a problem of fracturing or imprinting caused by the riveting pin 2000 to the protruding portion 3122, so as to protect the first insulating member 31, so that insulating and sealing reliability between the housing 1 and the terminal 2 is improved, and reliability of the battery cell 102 is improved. In addition, because the first fixing portion 22 can be completely covered by the riveting pin 2000, problems of imprinting formed by the first fixing portion 22 and unqualified flatness that are caused because the first fixing portion 22 cannot be completely pressed by the riveting pin 2000 can be resolved.

It should be noted that, in a case of no conflict, the embodiments of the present application and features in the embodiments can be combined with each other.

The foregoing are merely preferred embodiments of the present application and are not intended to limit the present application. For a person skilled in the art, the present application may have various modifications and changes. Any modification, equivalent replacement, improvement and the like made without departing from the spirit and principle of the present application shall fall within the protection scope of the present application.

## Claims

1. A battery cell, comprising:
a housing, comprising a first housing wall;
a terminal, wherein the terminal comprises a pass-through portion that passes through the first housing wall, and a first fixing portion and a second fixing portion that are connected to the pass-through portion and that are respectively disposed on two sides of the first housing wall in a wall thickness direction, and the first fixing portion comprises a first surface facing away from the first housing wall; and
a first insulating member, wherein the first insulating member is disposed on a side of the first housing wall facing toward the first fixing portion, and comprises a first part located between the first fixing portion and the first housing wall, and a second part located in an outer peripheral region of the first fixing portion, wherein
the second part comprises a relief surface disposed around the first fixing portion, and the relief surface is disposed closer to the first housing wall relative to the first surface.

2. The battery cell according to claim 1, wherein the second part comprises a protruding portion that protrudes toward a direction away from the first housing wall relative to the relief surface, and the relief surface is disposed between the protruding portion and the first fixing portion.

3. The battery cell according to claim 2, wherein the battery cell comprises an active material coating portion located on an inner side of the first housing wall, the first insulating member is disposed on the inner side of the first housing wall, the protruding portion comprises a first protrusion, the first protrusion comprises a second surface disposed away from the first housing wall, and the second surface is farther away from the first housing wall relative to the first surface, to abut against the active material coating portion.

4. The battery cell according to claim 3, wherein a quantity of first protrusions is more than one and the plurality of first protrusions are spaced apart.

5. The battery cell according to any one of claims 2 to 4, wherein a pressure relief structure is disposed on the first housing wall, the protruding portion comprises a second protrusion, and the second protrusion forms, at a position corresponding to the pressure relief structure, a cavity that is open toward a direction of the pressure relief structure.

6. The battery cell according to claim 5, wherein the second protrusion comprises a third surface disposed away from the first housing wall, and the third surface is disposed farther away from the first housing wall relative to the first surface, or is flush with the first surface.

7. The battery cell according to any one of claims 2 to 6, wherein the relief surface enables a spacing distance between the first fixing portion and the protruding portion to be greater than or equal to 1 mm.

8. The battery cell according to any one of claims 1 to 7, wherein a height difference between the relief surface and the first surface is greater than or equal to 0.5 mm.

9. The battery cell according to claim 8, wherein the height difference between the relief surface and the first surface is also less than or equal to 1 mm.

10. The battery cell according to any one of claims 1 to 9, further comprising:
a second insulating member, wherein the second insulating member is disposed on a side of the first housing wall facing toward the second fixing portion, and at least a part of the second insulating member is clamped between the second fixing portion and the first housing wall; and
an insulating and sealing member, wherein the insulating and sealing member is disposed between the first housing wall and the terminal, and is located on a side of the second insulating member close to the first fixing portion, and a side of the first insulating member close to the pass-through portion, and the insulating and sealing member is an elastic member and is elastically compressed to be sealed between the first fixing portion and the first housing wall.

11. The battery cell according to claim 10, wherein the first insulating member is disposed on the inner side of the first housing wall, a first relief space is formed on a side of the relief surface away from the first housing wall, a first channel that is in communication with the first relief space is formed between the first insulating member and the first fixing portion, a second channel that is in communication with the outside of the housing is formed between the second insulating member and the second fixing portion or the first housing wall, and a communication position between the second channel and the first channel is blocked by the insulating and sealing member.

12. The battery cell according to claim 11, wherein the first insulating member has a first groove that is open toward the first fixing portion, the first groove defines at least a part of the first channel, the second insulating member includes a second groove that is open toward the first housing wall, and the second groove defines at least a part of the second channel.

13. The battery cell according to claim 12, wherein both a groove depth of the first groove and a groove depth of the second groove range from 0.2 mm to 0. 35 mm, and both a groove width of the first groove and a groove width of the second groove range from 0.2 mm to 0. 5 mm.

14. The battery cell according to any one of claims 11 to 13, wherein the terminal is surrounded by a plurality of first channels that are spaced apart and a plurality of second channels that are spaced apart, and positions of the plurality of first channels and positions of the plurality of second channels are in one-to-one correspondence.

15. The battery cell according to claim 14, wherein the first channels are respectively provided on two opposite sides of the terminal, and a quantity of second channels is the same as a quantity of first channels, and the positions of the second channels correspond to the positions of the first channels.

16. The battery cell according to any one of claims 10 to 15, wherein the insulating and sealing member comprises a sealing portion disposed between the first fixing portion and the first housing wall, and an insulating portion disposed between the pass-through portion and the first housing wall, the sealing portion is disposed close to the pass-through portion relative to the first part, and is elastically compressed to be in sealing fit between the first fixing portion and the first housing wall, and one end of the insulating portion away from the first fixing portion abuts against the second insulating member.

17. The battery cell according to any one of claims 10 to 16, wherein the first part comprises a first section portion and a second section portion, the first section portion is clamped between the first fixing portion and the first housing wall, the second section portion is connected to a side of the first section portion close to the pass-through portion, the second section portion and the first fixing portion are spaced apart, to form a second relief space between the second section portion and the first fixing portion, and a part of the insulating and sealing member extends into the second relief space.

18. The battery cell according to any one of claims 1 to 17, wherein an accommodating cavity is formed in the housing, an accommodating groove that is open toward a direction away from the accommodating cavity is formed on the terminal, the terminal has a communication hole, and the communication hole runs through a side groove wall that is of the accommodating groove and that is close to the accommodating cavity, and is in communication with the accommodating cavity and the accommodating groove.

19. The battery cell according to claim 18, wherein the battery cell comprises a battery core assembly, the battery core assembly comprises an active material coating portion received in the accommodating cavity, and a conductive portion connected to the active material coating portion, and the conductive portion passes through the communication hole to be at least partially received in the accommodating groove.

20. The battery cell according to claim 18 or 19, wherein the battery cell comprises a terminal cover plate that covers the accommodating groove, a liquid injection hole that is in communication with the accommodating groove is formed on the terminal cover plate, and the battery cell further comprises a sealing structure configured to seal the liquid injection hole.

21. The battery cell according to any one of claims 1 to 20, wherein a plurality of terminals are disposed on the first housing wall, and the second part comprises the relief surface that is separately disposed around each first fixing portion.

22. The battery cell according to claim 21, wherein a quantity of terminals on the first housing wall is two, and polarities of the two terminals are opposite.

23. The battery cell according to any one of claims 1 to 22, wherein the housing comprises a housing body and an end cover, the housing body defines the accommodating cavity that is open toward a direction of the end cover, the end cover covers an opening of the accommodating cavity, and the first housing wall is a wall portion that is of the housing body and that is disposed opposite to the end cover.

24. The battery cell according to claim 23, wherein the first fixing portion is located on a side of the first housing wall facing toward the accommodating cavity, and the second fixing portion is riveted to the first housing wall.

25. A battery, wherein the battery comprises the battery cell according to any one of claims 1 to 24.

26. A power consuming apparatus, wherein the power consuming apparatus comprises the battery according to claim 25.
